# EUROPEAN PATENT SPECIFICATION

(11) **EP 3 501 618 B1**
(45) Date of publication and mention of the grant of the patent: **17.08.2022**
(21) Application number: 18213118.5
(22) Date of filing: 17.12.2018
(51) Int. Cl.: B01D 17/02

(54) **METHOD OF OPERATION OF AN OFFSHORE SUBSTATION**
VERFAHREN ZUM BETRIEB EINER OFFSHORE-UNTERSTATION
PROCÉDÉ DE FONCTIONNEMENT D'UNE SOUS-STATION OFFSHORE

(30) Priority: 20.12.2017 GB 201721427
(43) Date of publication of application: 26.06.2019
(73) Proprietor: Siemens Energy Global GmbH & Co. KG, 81739 München (DE)
(72) Inventor: Mroz, Ryszard, Middleton, Manchester, M24 4AZ (GB); Rogers, Mark, Standish, Wigan, WN6 0XU (GB); Smith, Ewan, Edinburgh, EH4 3PF (GB)
(74) Representative: Roth, Thomas

(56) References cited:
- DE-A1- 3 612 288
- US-A- 5 244 569
- US-A1- 2004 195 186
- US-B1- 6 427 848

## Description

The present disclosure relates to a method of operating an offshore substation comprising a transformer assembly, the transformer assembly comprising a transformer and a sump tank.

In particular the disclosure is concerned with a method of operating a sump tank for pollution control on the offshore substation.

### Background

Transformers on offshore electrical substations are conventionally filled with liquid as a cooling medium to reduce operating temperatures. Known types of cooling media include mineral oil.

During operation or maintenance, cooling medium may be released from the transformer. Where mineral oil is used as the cooling medium, discharge of the mineral oil should be prevented because mineral oil is classed as a hazardous substance. A separator tank collects runoff including cooling medium and, when a probe senses the presence of mineral oil, closes an outlet valve to prevent discharge of the mineral oil from the separator tank. Manual intervention is required periodically to remove the mineral oil building up in the separator tank.

Esters are a known alternative to mineral oils as cooling media. A suitable choice of ester possesses a higher flashpoint than mineral oil, reducing the risk of damage to the substation as well as injury to personnel. Although esters are considered more environmentally friendly than mineral oil, the release of esters to the environment is still not desirable. Additionally, it has been found that a conventional separator tank cannot readily be adapted to reliably sense the presence of low concentrations of an ester, although the tank can be adapted to sense relatively high concentrations of an ester. Therefore, a traditional separator tank may not be suitable for the preventing discharge of small volumes of ester, so using such a tank risks a release of ester into the environment.

Hence a sump tank system for reliably reducing the release of ester, even when present in low concentrations, is highly desirable.

US5244569 describes a collector for use in combination with equipment holding petroleum products and suitable for attachment to such equipment for collecting oil seepage and lubricant excess which may fall or drip into the collector.

DE3612288 describes an oil separator comprises a collecting tank serving for oil separation, which collecting tank is provided in its bottom region with a water outflow pipe which can be closed by a float-controlled valve.

### Summary

According to the present invention there is provided a method as set forth in the appended claims. Other features of the invention will be apparent from the dependent claims, and the description which follows.

Accordingly there may be provided an offshore substation not being part of the invention (not claimed) for carrying out the method of the invention, comprising a transformer assembly, the transformer assembly comprising a transformer and a sump tank for pollution control, comprising: a basin defining a collection volume and a discharge line in flow communication with the collection volume. It may further comprise a top cover extending partway over the basin to define: a covered portion of the collection volume. There may also be provided an exposed portion of the collection volume. A baffle may extend from the top cover into the collection volume and terminate at a baffle tip, wherein the exposed portion of the collection volume is located on a first side of the baffle and the discharge line is located on a second side of the baffle.

The sump tank of offshore substation not being part of the invention (not claimed) is suitable for controlling the discharge of ester into the environment by utilising the natural biodegradation of ester into non-toxic substances. For this purpose, the exposed portion of the collection volume in use collects water, for example rainfall, as well as runoff ester. Accordingly, a body of water and ester accumulates in the collection volume. The ester will tend to settle at the water surface, where it will naturally biodegrade into carbon dioxide and water. In order to ensure sufficiently rapid and uninterrupted biodegradation of the ester, the top cover and the baffle are provided to aid this process by preventing agitation and mixing of separated liquids. Such agitation may be caused, in particular, by rainfall. The top cover may be configured to prevent a direct disturbance of the covered portion, while the baffle is configured to prevent a disturbance in the exposed portion of the collection volume from migrating to the covered portion. The sump tank may thus maintain a consistently high rate of biodegradation before releasing of its contents into the environment without significant impact for marine life.

The sump tank may comprise a plurality of baffles arranged in sequence between the exposed portion of the collection volume and the discharge line.

The sump tank may comprise a weir for directing liquid flow towards the top cover, the weir extending from a floor of the basin into the collection volume and terminating in a weir tip.

The weir may be located between a first baffle of the plurality of baffles and a second baffle of the plurality of baffles.

A distance between the tip of the weir and the top cover may be shorter than a distance between the tip of the baffle and the top cover.

The sump tank may comprise a plurality of weirs arranged in sequence between the exposed portion of the collection volume and the discharge line.

The discharge line may be located closer to the floor of the basin than to the top cover.

The sump tank may be one in which the collection volume is sized in order to accept at least 2 months rainfall, a minimum level of water, chemicals released from the transformer and any components dislodged from the transformer.

The sump tank may comprise a fill-level sensor configured to monitor a liquid level in the collection volume.

The fill-level sensor may be carried by the top cover and configured to use ultrasound to monitor the liquid level in the collection volume.

The fill-level sensor may be configured to detect a minimum fill level and to transmit a first signal in response to detection of the minimum fill level, and wherein the discharge line is configured to close in response to receipt of the first signal by the discharge line.

The fill-level sensor may be configured to detect a maximum fill level and to transmit a second signal in response to detection of the maximum fill level, and wherein the discharge line is configured to open in response to receipt of the second signal by the discharge line.

The basin may comprise a transfer opening at low level for receiving liquids at low level from, and in flow communication with, a collection structure for collecting liquids.

There may be provided a transformer assembly comprising a transformer and the sump tank as defined above.

There may be provided an offshore substation comprising the transformer assembly as defined above.

In accordance with the present invention, a method of operating an offshore substation comprising a transformer assembly, the transformer assembly comprising a transformer and a sump tank for pollution control, the method comprising: providing a basin defining a collection volume; collecting liquid in the collection volume by: liquid entering an exposed portion of the collection volume through an opening defined by the basin, and passing the liquid from the exposed portion to a covered portion of the collection volume past a baffle, thus passing the liquid from a first side of the baffle to a second side of the baffle; permitting the liquid in the collection volume to rise to a maximum fill level; detecting the maximum fill level by a fill-level sensor which generates a first signal in response to detecting the maximum fill level; opening a discharge line in flow communication with the collection volume in response to the first signal; causing the liquid in the collection volume to decrease to a minimum fill level; detecting the minimum fill by the fill-level sensor which generates a second signal in response to detecting the minimum fill level; closing the discharge line in response to the second signal; and again permitting the liquid in the collection volume to rise to the maximum fill level; wherein the liquid comprises a mixture of water and ester from the transformer and wherein the ester is collected at the surface of the liquid in the covered portion and allowed to biodegrade.

The water may comprise rainwater and runoff water

### Brief Description of the Drawings

Examples of the method of the present disclosure will now be described with reference to the accompanying drawings, in which:
Figure 1 is a partial schematic view of an offshore substation including a sump tank for carrying out a method according to the present disclosure;
Figure 2 is another partial schematic view of the offshore substation, with some detail removed for clarity;
Figure 3 is a schematic cross-sectional view of the sump tank;
Figure 4 is a cross-sectional view of the sump tank when partially filled with a fluid;
Figure 5 is a cross-sectional view of the sump tank with less fluid than in Figure 4; and
Figure 6 is a flow chart illustrating a method of pollution control according to the present disclosure.

### Detailed Description

The present invention relates to a method applicable to a sump tank to provide means of pollution control, particularly for applications where an ester is employed. Envisaged applications include ester-cooled electrical network equipment, such as a transformer, as may be used, for example, on an offshore substation.

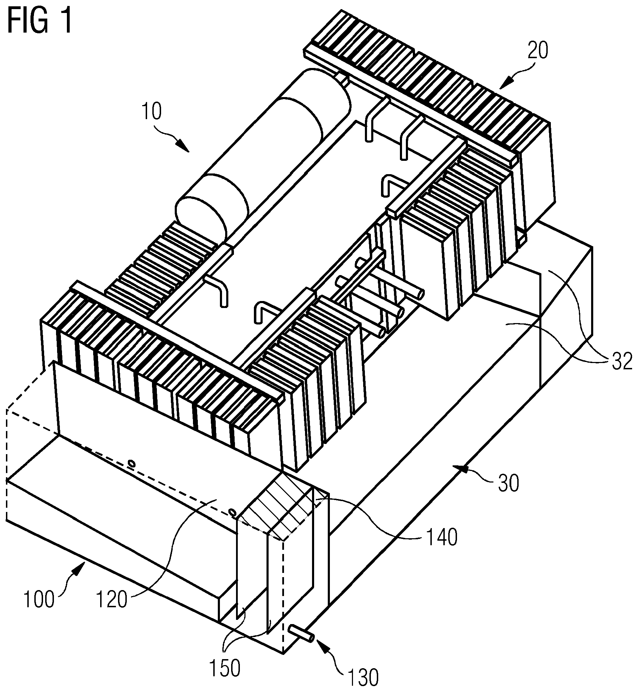

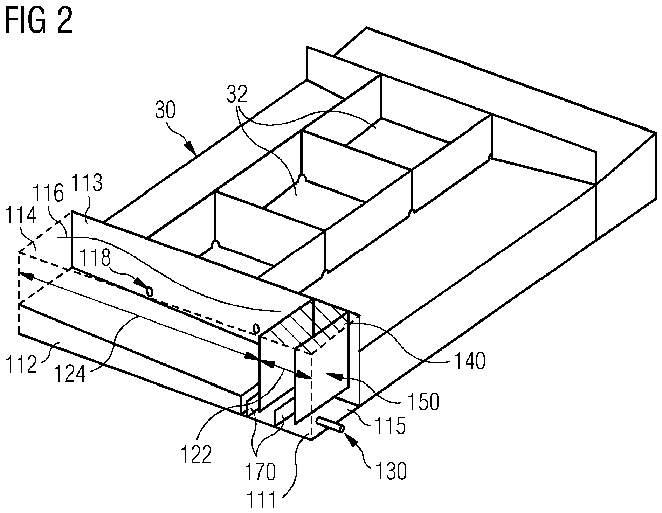

By way of context, Figures 1 and 2 are partially broken-away perspective views of a transformer assembly 10 as may be used on an offshore substation.

The transformer assembly 10 comprises a transformer 20 (shown in Figure 1, with some detail suppressed in Figure 2) located above a collection structure 30 which in use may form part of the deck of the offshore substation 10. According to the present example, the transformer 20 is cooled with a suitable choice of ester. A suitable choice of ester may include, for example, "MIDEL(R) 7131 Synthetic Ester" manufactured by M&I Materials Limited.

The collection structure 30 located under the transformer 20 is configured to collect spillage or leakage from the transformer 20, as may happen accidentally or following a failure, or during maintenance. Moreover, as the transformer assembly 10 will be exposed to rainfall, water is also collected by the collection structure 30. It is expected that under all circumstances, except for a catastrophic transformer failure, rainfall will make up the majority of liquid in the collection structure 30. The collected liquid, i.e. water and any chemicals released from the transformer 20, flows through a series of interconnected cells 32 into a sump tank 100.

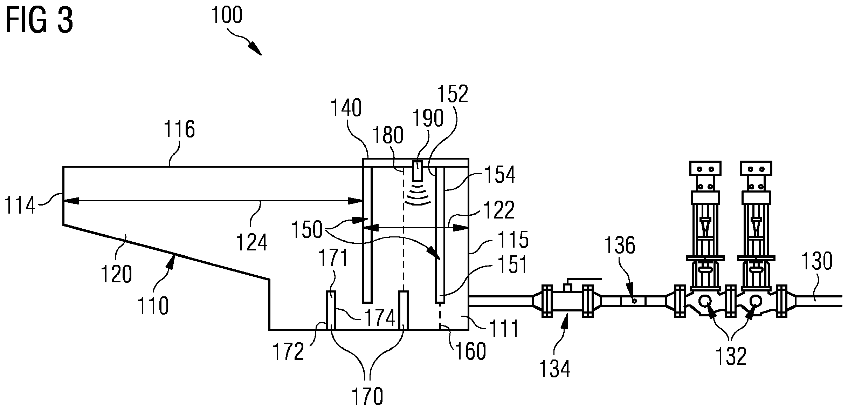

Figure 3 is a schematic cross-sectional view of the sump tank. The sump tank 100 is an open-topped tank for holding and separation of chemicals.

The sump tank 100 comprises a basin 110. The basin 110 includes a floor 111, a first sidewall 112 (shown in Figure 2) and a second sidewall 113 (shown in Figure 2), a first end wall 114 and a second end wall 115. A width of the basin 110 is measured between the sidewalls 112, 113, while a length of the basin 110 is measured between the end walls 114, 115.

The basin 110 defines a collection volume (or cavity) 120. The sump tank 100 is configured to collect and hold liquid, such as water and/or chemicals, in the collection volume 120. According to the present example, the collection volume 120 is delimited by the first sidewall 112, the second sidewall 113, the first end wall 114 and the second end wall 115.

The sump tank 100 comprises a discharge line 130 in flow communication with the collection volume 120. The discharge line 130 is configured for discharging or releasing liquid retained in the collection volume 120. According to the present example, the discharge line 130 is provided in the second end wall 115 of the basin 110 and located closer to the floor 111 of the basin 110 than to the top cover 140. Locating the discharge line close to the floor 111 ensures that agitation of liquid held in the collection volume 120 and particularly the surface of this liquid, is minimal when discharging. According to some examples, the discharge line 130 is located not higher than the tip 151 of the baffle 150.

The sump tank 100 comprises a top cover 140 extending partway over the basin 110. That is to say, the top cover 140 extends over some of the basin 110, but not over the entire basin 110. Accordingly, the top cover 140 is configured to define a covered portion 122 of the collection volume 120, and an exposed portion 124 of the collection volume 120. The exposed portion 124 of the collection volume 120 is located under an opening 116 in the basin 110. Through the opening 116 liquid, such as rain or runoff water, can enter the exposed portion 124 of the collection volume 120. By contrast, liquid cannot enter the collection volume 120 through the top cover 140 which is substantially impermeable to liquid. The sump tank 100 also comprises a transfer opening 118 in the basin 110. The transfer opening 118 is an opening in the basin 110 configured to enable liquid to pass from the cells 32 of the collection structure 30 into the sump tank 100. According to the present example, the transfer opening 118 is formed in the second sidewall 113. The transfer opening is at a low level in the basin.

The top cover 140 defines an uppermost portion of the collection volume 120.

The sump tank 100 comprises a baffle 150 which extends from the top cover 140 into the collection volume 120. The baffle 150 spans the entire width of the basin 110, i.e. extends from the first sidewall 112 to the second sidewall 113. The baffle 150 defines an upper barrier in the collection volume 120.

The baffle 150 comprises a baffle tip 151 defining a lowermost portion of the baffle 150, i.e. the portion closest to the floor 111 of the basin 110. The baffle tip 151 is spaced from the floor 111 of the basin 110. A lower gap 160 is defined between the baffle 150 and the floor 111 of the basin 110. Accordingly, a flow of liquid can flow through the lower gap 160 to pass the baffle 150, whereas the baffle 150 itself forms a barrier impermeable to liquid. In use, liquid passes from the first side 152 to the second side 154 of the baffle 150.

According to the present example, a plurality of baffles 150 are provided. The plurality of baffles 150 are arranged sequentially (i.e. in series) so that liquid flowing from the exposed portion 124 of the collection volume 120 towards the discharge line 130 first passes a first baffle 150 and subsequently passes a second baffle 150.

The sump tank 100 comprises a weir 170. The weir extends from the floor 111 of the basin 110 into the collection volume 120. The weir 170 spans the entire width of the basin 110, i.e. extends from the first sidewall 112 to the second sidewall 113. The weir 170 defines a lower barrier in the collection volume 120. As shown in Figure 3, the weir 170 can be provided in the exposed portion 124 of the collection volume 120 or can be provided in the covered portion 122 of the collection volume 120.

The weir 170 is configured to direct liquid flow towards the top cover 140. That is, a liquid flow incident on the weir 170 is redirected (i.e. travels) upwardly. Thereby a collection of ester at the liquid surface may be promoted. Additionally, direct flow of ester towards the discharge line 130 may be inhibited by the weir 170. Accordingly, the weir 170 cooperates with the baffle 150 to further increase the efficiency with which ester is biodegraded in the sump tank 100, because collection of ester is promoted and its release inhibited.

The weir 170 comprises a weir tip 171 defining an uppermost portion of the weir 170, i.e. the portion closest to the top cover 140. The weir tip 171 is spaced from the top cover 140. An upper gap 180 is defined between the weir 170 and the top cover 140. Accordingly, a flow of liquid can utilise the upper gap 180 to pass the weir 170, whereas the weir 170 itself forms a barrier impermeable to liquid. That is to say, liquid passes from a first side 172 to a second side 174 of the weir 170.

A plurality of weirs 170 are provided according to the present example. The plurality of weirs 170 are arranged sequentially so that liquid flowing from the exposed portion 124 of the collection volume 120 towards the discharge line 130 first passes a first weir 170 and subsequently passes a second weir 170. It is noted that although according to this example both a plurality of baffles 150 and a plurality of weirs 170 are provided, according to other examples a single baffle 150 may be provided in combination with a plurality of weirs 170.

According to the present example, the baffles 150 and the weirs 170 are arranged into pairs. The first weir 170 is followed by the first baffle 150 to define a first pair; the first baffle 150 is followed by the second weir 170 to define a second pair; and the second weir 170 is followed by the second baffle 150 to define a third pair.

As shown in Figure 3, the discharge line 130 comprises a pair of automatic valves 132, a manual valve 134 and a sample point 136. The pair of automatic valves 132 is configured to open and close automatically in response to detection results from a fill-level sensor, as detailed below. The manual valve 134 provides for means of manually opening or closing the discharge line 130. The sample point 136 provides for a means of sampling liquid discharged through the sample line 130, for example in order to analyse the composition of substances being discharged.

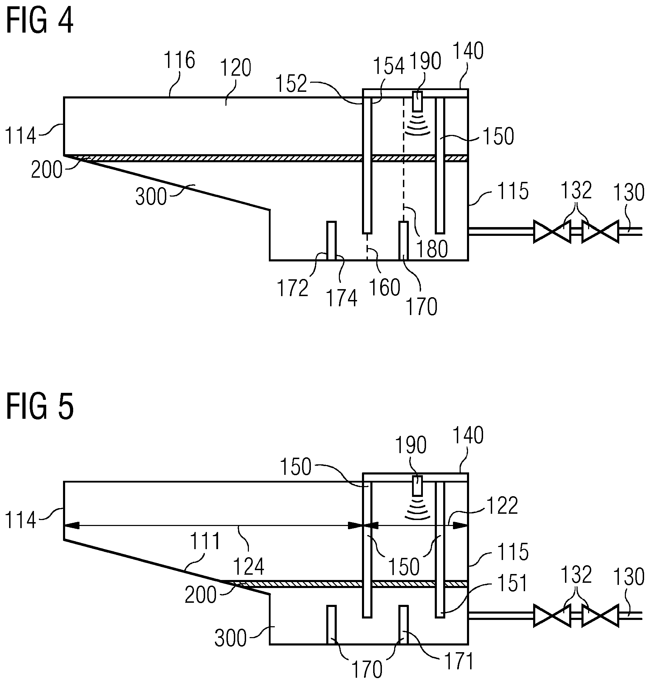

Figure 4 is a cross-sectional view of the sump tank 100 in a first filled configuration.

The sump tank 100 is configured to collect water, particularly rainwater and runoff water, through the opening 116 and through the transfer opening 118. Runoff cooling medium is also collected in the collection volume 120. Collection proceeds until a maximum fill level is reached. The maximum fill level is schematically shown in Figure 4. When the maximum fill level is reached, the weirs 170 are fully submerged and the water surface is close to the opening 116 and the top cover 140. A clearance space is maintained between the surface of the liquid and the opening 116 to prevent spillage of the contents of the collection volume 120.

A fill-level sensor 190 is provided to monitor the fill level of liquid held in the collection volume 120. Any suitable sensor may be used for determining the fill level, for example a floatation device. According to the present example, the fill-level sensor 190 is provided as an ultrasonic sensor. The fill-level sensor 190 is located at the top cover 140 and configured to measure the distance to the surface of the liquid body held in the collection volume 120. When this distance drops to a particular value, the fill-level sensor 190 signals that the maximum fill level has been reached. In response to reaching the maximum fill level, the discharge line 130 is opened to release liquid from the collection volume 120. For this purpose any suitable controller may be configured to receive and transmit signals between the fill-level sensor 190 and the discharge line 130, using any suitable means of communication, e.g. wireless or wired means. A first signal is transmitted from the fill-level sensor 190 to the controller, informing the controller that the maximum fill level is reached. In response to receiving the first signal, the controller transmits to the discharge line 130 a second signal, instructing the discharge line 130 to open. According to the present example, the second signal comprises a command that the automatic valves 132 are to be opened.

Figure 5 is a cross-section view of the sump tank 100 in a second filled configuration.

The fill level schematically shown in Figure 5 corresponds to a minimum fill level. The minimum fill level is a configuration of the collection volume (120) in which the collection volume (120) contains a minimum amount of liquid, i.e. the collection volume (120) is non-empty. The minimum fill level is reached after releasing a corresponding quantity of liquid to bring the sump tank 100 from the maximum fill level to the minimum fill level. The discharge line 130 is configured to maintain a low discharge rate over an extended period of time. Thus, laminar flow may be ensured and turbulence avoided, ensuring that agitation of the liquid surface is minimised. The period of time it takes for a discharge from maximum fill level to minimum fill level may lie between 5 and 10 hours. The total discharge volume may be between 10 and 30m³ (cubic meters), for example 20m³.

The fill-level sensor 190 is configured to monitor the distance to the surface of the body of liquid held in the collection volume during discharge. When this distance reaches a particular value, the fill-level sensor 190 provides a notification that the minimum fill level has been reached and the discharge line 130 is closed. For this purpose a third signal may be transmitted from the fill-level sensor 190 to the controller. The third signal comprises information that the minimum fill level has been reached. In response to receiving the third signal, the controller transmits a fourth signal to the discharge line 130, instructing the discharge line 130 to close. According to the present example, the fourth signal causes the automatic valves 132 to close.

The sump tank 100 is configured to retain a minimum level of liquid at all times. When the sump tank 100 is in the minimum level configuration, the baffles 150 are at least partially submerged. Thus, even when the minimum level is reached, the baffles 150 continue to divide the surface of the body of liquid held in the collection volume 120.

After the discharge, the sump tank 100 again collects water and ester until the maximum fill level is reached. The difference between maximum fill level and minimum fill level may correspond to approximately one to two months of rainfall, which generally depends on the particular location of the sump tank 100, although capacity for more than two months of rainfall may be provided in some locations. According to one example, this difference corresponds to 41 days of rainfall. The sump tank 100 therefore cycles through a collection-and-release cycle, including the extreme states of maximum fill level and minimum fill level, over a period dependent on precipitation, regularly discharging its contents and continuously biodegrading ester.

Ester may have a lower density than water. For example, a particular choice of ester may have a density of approximately 978kg/m³ (kilograms per cubic meter) at 10°C (degrees Celsius), whereas water has a density of 1000kg/m³ at 10°C. It follows that ester 200 will tend to settle at the surface of the water 300 in the collection volume 120. When settled at the water surface, the ester rapidly biodegrades into non-toxic substances. Ester 200 which collects at the surface of the water 300 in the exposed portion 124 of the collection volume 120, however, will be susceptible to emulsification due to rainfall directly impacting the surface of liquid in the exposed portion 124. By contrast, ester 200 which collects at the surface of the water 300 in the covered portion 122 of the collection volume will be shielded from rainfall, thus preventing agitation and emulsification. Additionally, given that the baffle 150 is continuously submerged during the release-and-collection cycle, the baffle 150 continuously divides the liquid surface between the exposed portion 124 and the covered portion 122. Accordingly, the impact of agitation in the exposed portion 124 on the covered portion 122 is minimised.

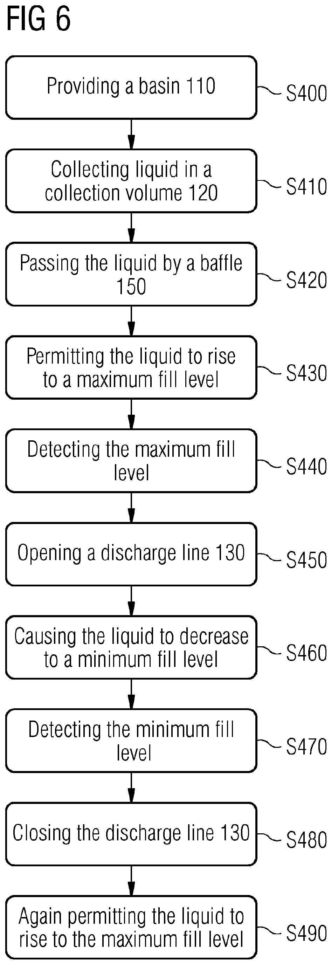

Figure 6 illustrates a method of pollution control using the collection-and-release cycle described with reference to Figures 4 and 5.

The method for pollution control comprises providing a basin defining a collection volume (S400). The method further comprises collecting liquid in the collection volume (S410). The collecting of the liquid may comprise liquid entering an exposed portion of the collection volume (120) through an opening (116) defined by the basin (110), and passing the liquid from the exposed portion (124) to a covered portion (122) of the collection volume (120) past a baffle (S420), thus passing the liquid from a first side (152) of the baffle (150) to a second side (154) of the baffle (150). The method further comprises permitting the liquid in the collection volume to rise to a maximum fill level (S430) and detecting the maximum fill level by a fill-level sensor (S440) which generates a first signal in response to detecting the maximum fill level. The method further comprises opening a discharge line in flow communication with the collection volume (S450) in response to the first signal. The method may further comprise causing the liquid in the collection volume to decrease to a minimum fill level (S460). The method may further comprise detecting the minimum fill by the fill-level sensor (S470) which generates a second signal in response to detecting the minimum fill level. The method further comprises closing the discharge line (S480) in response to the second signal. The method further comprises permitting the liquid in the collection volume (120) to rise to the maximum fill level (S490) again.

The sump tank 100 provides for the collection of water and ester and is configured to hold the ester for natural biodegradation thereof before releasing the resulting non-toxic substances. The sump tank 100 therefore provides a means of pollution control to ensure that significant impact on the natural environment is prevented when the contents of the sump tank 100 are discharged.

In order to ensure a constantly high rate of biodegradation of the ester, a minimum fill level is continuously maintained in the sump tank 100 so that the ester will settle at the water surface. The rate of biodegradation is further improved by the covered portion 122 of the collection volume 120 being shielded from rainfall by the top cover 140 and protected from agitation of the exposed portion 124 through the baffle 150.

The separation of the ester and its collection is improved further by the weirs 170, which are arranged to redirect flow upwards so that ester is encouraged to settle at the water surface. Particularly in combination with the baffles 150, efficient biodegradation is ensured. Furthermore, the weirs 170 stop solids from travelling to the discharge line. Such solids may include components dislodged from the transformer. These solids will collect at the weir 170, unable to pass, so that the discharge line 130 may be kept clear of solids which could otherwise damage and/or block the discharge line 130. The weir 170 is therefore particularly beneficial where the discharge line 130 is provided in close vicinity to the floor 111 of the basin 110, where the discharge line 130 would be particularly prone to blockage. The capacity of the collection volume of the sump tank may be adapted to allow for all the contents of the transformer to be collected, of whatever type.

A long discharge time for releasing the liquid from the collection volume 120 ensures that during discharging too, agitation of the water surface is minimised and emulsification of the ester prevented.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of operating an offshore substation comprising a transformer assembly (10), the transformer assembly comprising a transformer (20) and a sump tank (100) for pollution control, the method comprising:
providing a basin (110) defining a collection volume (120);
collecting liquid in the collection volume (120) by:
liquid entering an exposed portion (124) of the collection volume (120) through an opening (116) defined by the basin (110), and
passing the liquid from the exposed portion (124) to a covered portion (122) of the collection volume (120) past a baffle (150), thus passing the liquid from a first side (152) of the baffle (150) to a second side (154) of the baffle (150);
permitting the liquid in the collection volume (120) to rise to a maximum fill level;
detecting the maximum fill level by a fill-level sensor (190) which generates a first signal in response to detecting the maximum fill level;
opening a discharge line (130) in flow communication with the collection volume (120) in response to the first signal;
causing the liquid in the collection volume (120) to decrease to a minimum fill level;
detecting the minimum fill level by the fill-level sensor (190) which generates a second signal in response to detecting the minimum fill level;
closing the discharge line (130) in response to the second signal; and
again permitting the liquid in the collection volume (120) to rise to the maximum fill level;
wherein the liquid comprises a mixture of water and ester from the transformer; and wherein the ester is collected at the surface of the liquid in the covered portion (122) and allowed to biodegrade.

2. A method according to claim 1, wherein the water comprises rainwater and runoff water.

## Patentansprüche

1. Verfahren zum Betrieb einer Offshore-Unterstation, die eine Transformatoranordnung (10) umfasst, wobei die Transformatoranordnung einen Transformator (20) und einen Sumpftank (100) zur Pollutionskontrolle umfasst, wobei das Verfahren Folgendes umfasst:
Bereitstellen eines Beckens (110), das ein Sammelvolumen (120) definiert,
Sammeln von Flüssigkeit in dem Sammelvolumen (120) durch:
Flüssigkeit, die durch eine durch das Becken (110) definierte Öffnung (116) in einen freiliegenden Abschnitt (124) des Sammelbehälters (120) eintritt, und
Führen der Flüssigkeit von den freiliegenden Abschnitt (124) zu einem überdeckten Abschnitt (122) des Sammelbehälters (120) an einem Leitblech (150) vorbei, somit Führen der Flüssigkeit von einer ersten Seite (152) des Leitblechs (150) zu einer zweiten Seite (154) des Leitblechs (150),
Zulassen, dass die Flüssigkeit in dem Sammelvolumen (120) bis zu einem maximalen Füllstand ansteigt,
Erkennen des maximalen Füllstands durch einen Füllstandsensor (190), der in Reaktion auf das Erkennen des maximalen Füllstands ein erstes Signal erzeugt,
Öffnen einer Abflussleitung (130), die in Strömungsverbindung mit dem Sammelvolumen (120) steht, in Reaktion auf das erste Signal,
Bewirken, dass die Flüssigkeit in dem Sammelvolumen (120) auf einen minimalen Füllstand zurückgeht,
Erkennen des minimalen Füllstands durch den Füllstandsensor (190), der in Reaktion auf das Erkennen des minimalen Füllstands ein zweites Signal erzeugt,
Schließen der Abflussleitung (130) in Reaktion auf das zweite Signal und
erneutes Zulassen, dass die Flüssigkeit in dem Sammelvolumen (120) bis zu dem maximalen Füllstand ansteigt,
wobei die Flüssigkeit eine Mischung aus Wasser und Ester aus dem Transformator umfasst und wobei der Ester an der Oberfläche der Flüssigkeit in dem überdeckten Abschnitt (122) gesammelt wird und biologisch abgebaut werden darf.

2. Verfahren nach Anspruch 1, wobei das Wasser Regenwasser und Ablaufwasser umfasst.

## Revendications

1. Procédé d'exploitation d'une sous-station offshore comprenant un ensemble (10) à transformateur, l'ensemble à transformateur comprenant un transformateur (20) et un réservoir collecteur (100) servant à la lutte contre la pollution, le procédé consistant :
à réaliser un bassin (110) définissant un volume de collecte (120) ;
à collecter du liquide dans le volume de collecte (120) du fait que :
du liquide entre dans une partie exposée (124) du volume de collecte (120) par une ouverture (116) définie dans le bassin (110), et que
du liquide passe de la partie exposée (124) à une partie couverte (122) du volume de collecte (120) au-delà d'un déflecteur (150), le liquide passant ainsi d'un premier côté (152) du déflecteur (150) à un second côté (154) du déflecteur (150) ;
à permettre au liquide du volume de collecte (120) de monter jusqu'à un niveau maximal de remplissage ;
à détecter le niveau maximal de remplissage au moyen d'un capteur (190) de niveau de remplissage qui produit un premier signal en réaction à la détection du niveau de remplissage maximal ;
à ouvrir une conduite de décharge (130) communiquant par écoulement avec le volume de collecte (120) en réaction au premier signal ;
à faire en sorte que le liquide du volume de collecte (120) baisse jusqu'à un niveau de remplissage minimal ;
à détecter le niveau de remplissage minimal au moyen du capteur (190) de niveau de remplissage qui produit un second signal en réaction à la détection du niveau de remplissage minimal ;
à fermer la conduite de décharge (130) en réaction au second signal, et
à de nouveau permettre au liquide du volume de collecte (120) de monter jusqu'au niveau de remplissage maximal,
étant entendu que le liquide comprend un mélange d'eau et d'ester provenant du transformateur et étant entendu que l'ester est collecté à la surface du liquide dans la partie couverte (122) et qu'on le laisse se biodégrader.

2. Procédé selon la revendication 1, étant entendu que l'eau comprend de l'eau de pluie et de l'eau de ruissellement.
